# EUROPÄISCHE PATENTSCHRIFT

(11) **EP 1 416 073 B1**
(45) Veröffentlichungstag und Bekanntmachung des Hinweises auf die Patenterteilung: **17.12.2008**
(21) Anmeldenummer: 03018910.4
(22) Anmeldetag: 20.08.2003
(51) Int. Cl.: D01H 7/88

(54) **Spindellagerung für eine Doppeldraht-Zwirnmaschine**
Spindle bearing for a double twister
Support de broche pour un retordoir à double torsion

(30) Priorität: 30.10.2002 DE 10250423
(43) Veröffentlichungstag der Anmeldung: 06.05.2004
(73) Patentinhaber: Volkmann GmbH, 47804 Krefeld (DE)
(72) Erfinder: Fink, Heinz, 47804 Krefeld (DE)
(74) Vertreter: Sroka, Peter-Christian

(56) Entgegenhaltungen:
- DE-A- 3 617 544
- DE-A- 19 502 714
- GB-A- 887 106

## Beschreibung

Die Erfindung betrifft eine Spindellagerung für eine Doppeldraht-Zwirnspindel, deren Spindelrotor einen Spindelschaft aufweist, der mittels eines oberen und eines unteren Lagers in einer an einer Spindelbank befestigbaren Lagerbuchse in vertikaler Anordnung drehbar gelagert ist, wobei auf dem Spindelschaft eine in Richtung des oberen Lagers schräg nach außen ansteigende Leitfläche befestigt ist.

Bei einer in der DE 36 17 544 A1 beschriebenen Spindellagerung dieser Art wird die Schmiermittelversorgung des oberen Lagers durch eine auf den Spindelschaft aufgeschobene, sich konisch nach oben erweiternde Distanzhülse vorteilhaft beeinflußt. Diese Distanzhülse erstreckt sich über den gesamten Abstand zwischen dem unteren Lager und dem oberen Lager, so daß bei rotierendem Spindelschaft und damit rotierender Distanzhülse das Schmiermittel durch Zentrifugalkraft verstärkt nach oben kriecht. Bei der bekannten Anordnung kann auch auf diese sich konisch nach oben erweiterende Distanzhülse verzichtet werden, wenn der Spindelschaft selbst sich konisch nach oben erweitert. Bei stillstehendem Spindelschaft fließt das Schmiermittel der Schwerkraft folgend nach unten, von wo aus es beim Wiederanlaufen der Spindel wieder bis zum oberen Lager kriechen muß.

Der Erfindung liegt die Aufgabe zugrunde, im Bereich der Lagerbuchse Maßnahmen vorzusehen, die jeweils für sich allein oder in Kombination betrachtet
a) die Schmiermittelversorgung insbesondere des oberen Lagers durch Verringerung des Kriechweges bei Wiederanlaufen der Spindel verbessern;
b) die Montage der Lagerbuchse in bzw. an der Spindelbank sowie die Montage des Spindelschaftes in der Lagerbuchse vereinfachen;
c) bei Fadenbruch das Einziehen von weiterhin aus der Fadenspeicherscheibe infolge Zentrifugalkraft austretendem Faden in den Spindellagerbereich verhindern; und
d) das Ablösen von sich nach einem Fadenbruch auf der Lagerbuchse aufwikkelnden Fadenlagen vereinfachen.

Zur Lösung der obigen Teilaufgabe a) dienen die Merkmale des Anspruchs 1 und in jeweils abgewandelten Ausführungsformen die Merkmale 2 - 10.

Zur Lösung der Teilaufgabe b) dienen die Merkmale insbesondere der Ansprüche 11 bis 13.

Zur Lösung der Teilaufgabe c) dienen die Merkmale des Anspruchs 14.

Zur Lösung der Teilaufgabe d) dienen die Merkmale des Anspruchs 15.

Die Erfindung wird im folgenden unter Bezugnahme auf die Zeichnung näher beschrieben.
Figur 1 zeigt einen Axialschnitt eines in einer Spindelbank gelagerten Spindelrotors einer Doppeldraht-Zwirnspindel:
Figur 2 zeigt eine Seitenansicht des in einem Lagergehäuse gelagerten Spindelrotors.

Die Figuren 3a bis 3d zeigen jeweils im Axialschnitt verschiedene Verteilerringprofile.

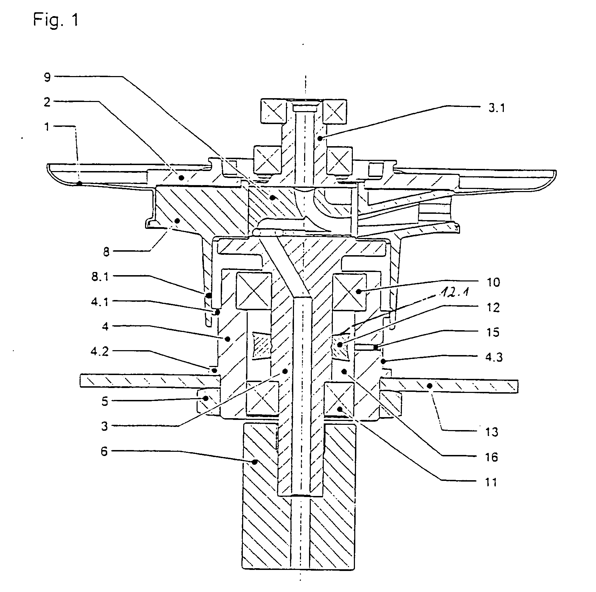

In Figur 1 ist ein Teil einer Spindelbank 13 dargestellt, in die eine Lagerbuchse 4 eingesetzt ist. In dieser Lagerbuchse 4 ist mittels Lagern 10, 11 der Spindelrotor gelagert, bestehend im wesentlichen aus:
- z. B. als Hohlachse ausgebildetem Spindelschaft 3 mit abgestufter Schaftverlängerung 3.1 am oberen Ende zur Lagerung eines nicht dargestellten Lieferspulenträgers;
- Drehteller, bestehend aus Fadenumlenkteller 1 und Fadenspeicherscheibe 8.

Zum Antrieb des Spindelrotors ist am unteren Ende des Spindelschaftes 3 ein Wirtel 6 befestigt, der mittels eines nicht dargestellten Tangentialantriebsriemens in Rotation versetzt werden kann.

Die Lagerbuchse 4 ist an ihrem durch eine Öffnung in der Spindelbank 3 hindurchgesteckten Ende mit einem Außengewinde zum Aufschrauben einer Befestigungsmutter 5 und einer sich auf der Oberseite der Spindelbank 13 abstützenden Stützschulter 4.2 versehen. Die Lagerbuchse 4 ist vorzugsweise im Spritzgußverfahren aus einem hochfesten Kunststoff hergestellt, wobei während des Spritzgießens bereits das obere Lager 10 in die Lagerbuchse eingeformt werden kann, die zur Abstützung des oberen Lagers 10 geeignete, radial nach innen vorspringende Stützringe bzw. Stützschultern aufweist.

An die Unterseite der Fadenspeicherscheibe 8 ist ein Zylindermantel 8.1 angeformt, dem im unteren Mantelbereich mit geringem Abstand eine am Außenumfang der Zylinderbuchse 4 angeformte, radial nach außen vorspringende Ringrippe 4.1 gegenüberliegt.

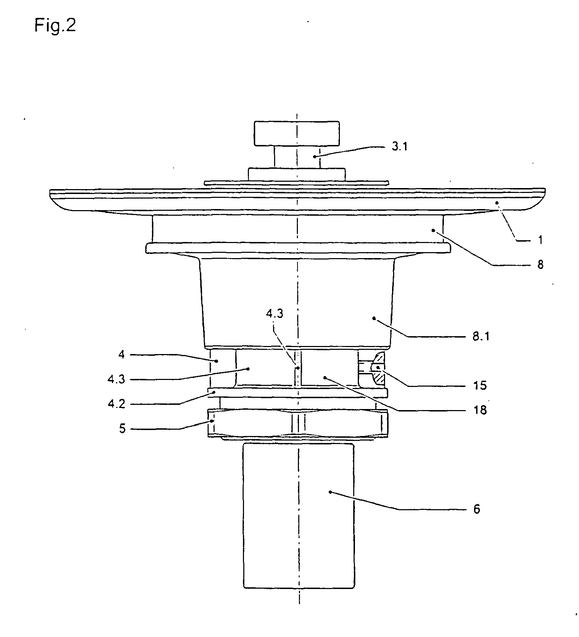

Die Lagerbuchse 4 ist zwischen der Stützschulter 4.2 und der Ringrippe 4.1 beispielsweise mit vier radial nach außen vorspringenden, axial verlaufenden Rippen 4.3 versehen, wobei durch eine der Rippen 4.3 ein Schmiermittelkanal 15 verläuft, siehe Figur 2.

Im Fall eines Fadenbruchs verhindert die Ringrippe 4.1 im Zusammenwirken mit dem Zylindermantel 8.1 einen Fadeneinzug in den Spindellagerbereich, da der bei rotierendem Spindelrotor infolge Zentrifugalkraft weiterhin von der nicht dargestellten Lieferspule abgezogene Faden sich ggf. in mehreren Fadenlagen auf den Rippen 4.3 aufwickeln kann; die Fadenlagen können dann in den Zwischenräumen zwischen den Rippen 4.3 in einfachster Weise, beispielsweise mittels einer Schere, entfernt werden.

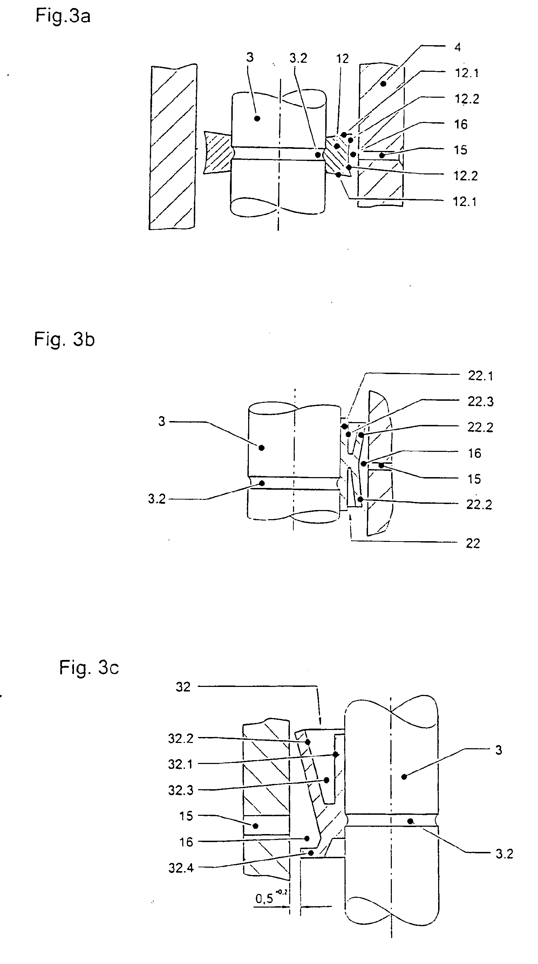

Der Spindelschaft 3 ist gemäß Figur 3a zwischen den Lagern 10, 11 mit einer Umfangsnut 3.2 zum Aufklipsen eines Schmiermittel-Verteilerrings 12 versehen, der vorzugsweise dem Schmiermittelkanal 15 gegenüberliegt.

Der Verteilerring 12 ist an seinen Ober- und Unterseiten mit in Richtung der oberen und unteren Lager 10 bzw. 11 radial nach außen gerichteten Schrägflächen 12.1 und an seinem eine umlaufende Einbuchtung aufweisenden Außenumfang ebenfalls mit in Richtung der oberen und unteren Lager radial nach außen gerichteten Schrägflächen 12.2 versehen. Aufgrund dieser Schrägflächen wird bei rotierendem Spindelschaft die Neigung des in dem Schmiermittelraum 16 befindlichen Schmiermittels unterstützt, sich in Richtung der oberen und unteren Lager 10, 11 zu bewegen.

Der in Figur 3b dargestellte Schmiermittel-Verteilerring 22 hat einen ersten gegen den Spindelschaft anliegenden Zylinderabschnitt 22.1, an den manschettenartig sich in Richtung der oberen und unteren Lager 10, 11 erweiternde Konusringe 22.2 angeformt sind. Die durch diese Konusringe 22.2 gebildeten inneren und äußeren Schrägflächen unterstützen bei rotierendem Spindelschaft die Neigung des Schmiermittels, in Richtung der oberen und unteren Lager zu strömen. Der obere Konusring 22.2 bildet zusammen mit dem Zylinderabschnitt 22.1 eine partielle Schmiermittelkammer 22.3, wodurch bei stillstehendem Spindelschaft 3 zumindest eine Teilmenge des in der Schmiermittelkammer 16 befindlichen Schmiermittels sich nicht in Richtung des unteren Lagers 11 absetzen kann, so daß bei Wiederanlauf des Spindelschaftes 3 das obere Lager 10 aus dieser Schmiermittelkammer 22.3 schnell mit Schmiermittel versorgt wird.

Der Schmiermittel-Verteilerring 32 gemäß Figur 3c hat einen gegen den Spindelschaft 3 anliegenden Zylinderabschnitt 32.1, an den manschettenartig ein sich in Richtung des oberen Lagers 10 erweiterender Konusring 32.2 anschließt, der eine nach oben offene, partielle Schmiermittelkammer 32.3 begrenzt und damit insgesamt die gleiche Funktion hat wie der in Figur 3b dargestellte obere Konusring 22.3 des Verteilerrings 22. An das untere Ende des Zylinderabschnitts 32.1 ist ein radial nach außen gerichteter Ringabschnitt 32.4 angeformt, der im Einbauzustand unterhalb des Schmiermittelkanals 15 liegt, so daß das Schmiermittel bei Neuschmierung nicht direkt ins untere Lager abdriftet, wodurch dieses Schmiermittel zumindest teilweise festgehalten und bei wiederanlaufendem Spindelschaft schneller dem oberen Lager 10 zugeführt werden kann.

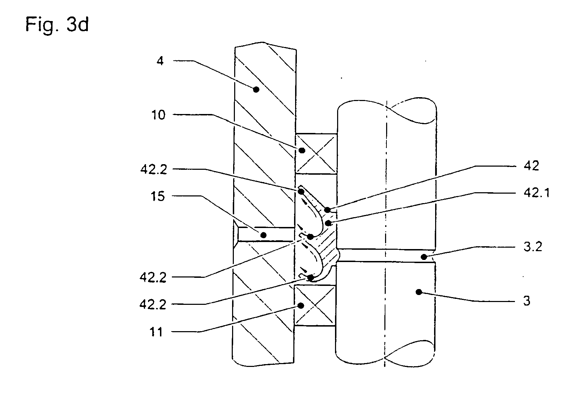

Der in Figur 3d dargestellte Schmiermittel-Verteilerring 42 besteht aus einem gegen den Spindelschaft 3 anliegenden Ringabschnitt 42.1, an den sich kammartig mehrere nach oben erweiternde Konusringe 42.2 anschließen, die vorzugsweise im Bereich des Ringabschnittes 42.1 abgerundete Übergangsabschnitte aufweisen können. Durch zum Beispiel drei Konusringe 42.2 sind drei nach oben hin offene, partielle Schmiermittel-Rückhaltekammern gebildet, die aufgrund ihrer schräg nach oben und außen ansteigenden Wandflächen die Neigung des Schmiermittels fördern, beim Wiederanlauf des Spindelschaftes 3 schnell in Richtung des oberen Lagers 10 zu kriechen.

Der Abstand zwischen dem Innenumfang der Lagerbuchse 4 und dem Außenumfang der äußersten Bereiche der Verteilerringe liegt vorzugsweise in der Größenordnung von 0,5 bis 0,7 mm.

Durch die kammartig nach oben und außen ansteigenden Abschnitte des jeweiligen Verteilerringes wird grundsätzlich beim Spindellauf die Bewegung des Schmiermittels insbesondere zum oberen Lager hin verstärkt bzw. gefördert. In den einzelnen nach oben offenen Kammern sammelt sich beim Stillstand der Spindel das Schmiermittel an, wodurch der Weg des Schmiermittels zu dem oberen Lager beim Wiederanlaufen der Spindel herabgesetzt und damit die Schmierung des oberen Lagers 10 früher einsetzt als bei Systemen ohne einen derartigen Schmiermittelverteiler- und -speicherring.

Wie aus Figur 1 ersichtlich, sind die Fadenspeicherscheibe 8 und der Fadenumlenkteller 1 drehfest mittels eines Zwischenringes 2 miteinander verbunden, der die Funktion einer Wuchtscheibe hat.

## Patentansprüche

1. Spindellagerung für eine Doppeldraht-Zwirnspindel, deren Spindelrotor einen Spindelschaft aufweist, der mittels eines oberen und eines unteren Lagers in einer an einer Spindelbank befestigbaren Lagerbuchse in vertikaler Anordnung drehbar gelagert ist, wobei auf dem Spindelschaft eine in Richtung des oberen Lagers schräg nach außen ansteigende Leitfläche befestigt ist, **dadurch gekennzeichnet, daß** die Leitfläche die Form eines auf dem Spindelschaft befestigten Verteilerringes (12; 22; 32; 42) hat, der eine mindestens nach oben hin offene Schmiermittel-Speicherkammer (12.1; 22.3; 32.3; 42.3) bildet.

2. Spindellagerung nach Anspruch 1, **dadurch gekennzeichnet, daß** der Verteilerring (12; 22) in Richtung beider Lager (10, 11) schräg nach außen gerichtete Leitflächen aufweist.

3. Spindellagerung nach Anspruch 1, **dadurch gekennzeichnet, daß** das umlaufende Profil des Verteilerrings (12) einen im wesentlichen trapezförmigen Querschnitt hat.

4. Spindellagerung nach Anspruch 3, **dadurch gekennzeichnet, daß** die äußere Umfangsfläche des Verteilerrings (12) eine umlaufende Einbuchtung hat.

5. Spindellagerung nach Anspruch 1, **dadurch gekennzeichnet, daß** der Verteilerring (22; 32; 42) einen inneren, vorzugsweise zylindrischen Ringabschnitt (22.1; 32.1; 42.1) aufweist, an den mindestens ein sich nach oben und außen erweiternder Konusring (22.2; 32.2; 42.2) angeformt ist.

6. Spindellagerung nach Anspruch 5, **dadurch gekennzeichnet, daß** der Verteilerring (22) einen an den Ringabsatz (22.1) angeformten, sich nach unten und außen erweiternden Konusring (22.2) aufweist.

7. Spindellagerung nach Anspruch 5, **dadurch gekennzeichnet, daß** der Verteilerring (32) einen an das untere Ende des Zylinderabschnitts (32.1) angeformten, radial nach außen gerichteten Ringabschnitt (32.4) aufweist.

8. Spindellagerung nach Anspruch 5, **dadurch gekennzeichnet, daß** der Verteilerring (42) drei an den zylindrischen Ringabschnitt (42.1) angeformte, nach oben und außen gerichtete Konusringe (42.2) aufweist.

9. Spindellagerung nach Anspruch 8, **dadurch gekennzeichnet, daß** die Konusringe (42.2) im Bereich des Ringabschnitts (42.1) abgerundete Übergangsabschnitte aufweisen.

10. Spindellagerung nach einem der Ansprüche 1 -9, **dadurch gekennzeichnet, daß** der Spindelschaft (3) mit einer Umfangsnut (3.2) zum Aufclipsen des Schmiermittel-Verteilerringes (12; 22; 32; 42) versehen ist.

11. Spindellagerung nach einem der vorhergehenden Ansprüche, **dadurch gekennzeichnet, daß** die Lagerbuchse (4) im Spritzgußverfahren aus hochfestem Kunststoffmaterial hergestellt ist und ein während des Spritzgießens in das Kunststoffmaterial eingeformtes Lager (10) aufweist.

12. Spindellagerung nach einem der vorhergehenden Ansprüche, **dadurch gekennzeichnet, daß** die Lagerbuchse (4) an ihrem unteren Ende einen mit Außengewinde versehenen Ansatz zum Durchstecken in eine Aufnahmeöffnung der Spindelbank (13) aufweist, auf welchen Gewindeansatz zur Befestigung der Lagerbuchse (4) in der Spindelbank (13) eine Gewindemutter (5) aufschraubbar ist.

13. Spindellagerung nach Anspruch 12, **dadurch gekennzeichnet, daß** die Lagerbuchse (4) oberhalb des Außengewindes eine Stützschulter (4.2) zum Abstützen der Lagerbuchse auf der Oberseite der Spindelbank (13) aufweist.

14. Spindellagerung nach einem der vorhergehenden Ansprüche, mit einer oberhalb der Lagerbuchse an dem Spindelschaft (3) drehfest befestigten Fadenspeicherscheibe (8), an deren Unterseite ein nach unten gerichteter Zylindermantel (8.1) angeformt ist, dem im unteren Mantelbereich mit geringem Abstand eine am Außenumfang der Zylinderbuchse (4) angeformte, radial nach außen vorspringende Ringrippe (4.1) gegenüberliegt.

15. Spindellagerung nach einem der vorhergehenden Ansprüche, **dadurch gekennzeichnet, daß** die Lagerbuchse an ihrem Außenumfang über einen Teil ihrer Länge radial nach außen gerichtete und in Achsrichtung verlaufende Rippen (4.3) aufweist.

## Claims

1. Spindle bearing for a double-wire twisting spindle, whose spindle rotor has a spindle shank that is rotatably mounted in a vertical arrangement in a bearing bush that can be attached to a spindle bearing plate by means of an upper and a lower bearing, a guide surface rising obliquely outwards in the direction of the upper bearing being attached to the spindle shank, **characterised in that** the guide surface has the form of a distributor ring (12; 22; 32; 42) attached to the spindle shank that forms a lubricant storage chamber (12.1; 22.3; 32.3; 42.3) that is open at least in the upwards direction.

2. Spindle bearing according to claim 1, **characterised in that** the distributor ring (12; 22) has guide surfaces directed obliquely outwards in the direction of both bearings (10, 11).

3. Spindle bearing according to claim 1, **characterised in that** the peripheral profile of the distributor ring (12) has an essentially trapezoidal cross-section.

4. Spindle bearing according to claim 3, **characterised in that** the outer peripheral surface of the distributor ring (12) has a peripheral recess.

5. Spindle bearing according to claim 1, **characterised in that** the distributor ring (22; 32; 42) has an inner, preferably cylindrical annular section (22.1; 32.1; 42.1) on which at least one tapered ring (22.2; 32.2; 42.2) widening upwards and outwards is formed.

6. Spindle bearing according to claim 5, **characterised in that** the distributor ring (22) has a tapered ring (22.2) widening downwards and outwards formed on the ring shoulder (22.1).

7. Spindle bearing according to claim 5, **characterised in that** the distributor ring (32) has an annular section (32.4) directed radially outwards formed on the bottom end of the cylindrical section (32.1).

8. Spindle bearing according to claim 5, **characterised in that** the distributor ring (42) has three tapered rings (42.2) directed upwards and outwards formed on the cylindrical annular section (42.1).

9. Spindle bearing according to claim 8, **characterised in that** the tapered rings (42.2) have rounded transition sections in the area of the annular section (42.1).

10. Spindle bearing according to one of the claims 1-9, **characterised in that** the spindle shank (3) is provided with a peripheral groove (3.2) to clip on the lubricant distributor ring (12; 22; 32; 42).

11. Spindle bearing according to one of the preceding claims, **characterised in that** the bearing bush (4) is made in a high-strength plastic material by injection moulding and has a bearing (10) moulded into the plastic material during the injection moulding process.

12. Spindle bearing according to one of the preceding claims, **characterised in that** the bearing bush (4) has on its bottom end a projection provided with an external thread for inserting into an accommodating opening of the spindle bearing plate (13), on to which threaded projection a threaded nut (5) can be screwed to fix the bearing bush (4) in the spindle bearing plate (13).

13. Spindle bearing according to claim 12, **characterised in that** the bearing bush (4) has a supporting shoulder (4.2) above the external thread to support the bearing bush on the top of the spindle bearing plate (13).

14. Spindle bearing according to one of the preceding claims, with a thread storage plate (8) fixed on the spindle shank (3) above the bearing bush so that it cannot rotate, on the bottom of which a downwards-directed cylindrical casing (8.1) is formed, opposite which, in the bottom casing area, at a small distance, lies an annular rib (4.1) projecting radially outwards formed on the outside perimeter of the cylindrical bush (4).

15. Spindle bearing according to one of the preceding claims, **characterised in that** the bearing bush has on its outside perimeter, over part of its length, ribs (4.3) directed radially outwards and running in an axial direction.

## Revendications

1. Un dispositif à broche pour un axe de filage en torsade à deux fils, dont le rotor de l'axe pivot comporte un arbre pivot, qui par le biais d'un dispositif supérieur et d'un dispositif inférieur est implanté dans un dispositif rotatif à coussinet qui vient se fixer à un cadre à bobine, à la verticale, de telle sorte que sur l'arbre pivot vient se fixer une surface de guidage inclinée vers l'extérieur, dans le sens du dispositif supérieur, comme illustré, de telle sorte que la surface de guidage a la forme d'une bague de distribution (12, 22, 32, 42) qui vient se fixer sur l'arbre pivot, ce qui crée au moins une chambre de stockage de lubrifiant qui s'ouvre par le haut (12.1, 22.3, 32.3, 42.3).

2. Un dispositif à broche basé sur l'affirmation 1 et se singularisant par le fait que la bague de distribution (12, 22), dans le sens des deux dispositifs (10, 11), soit inclinée vers l'extérieur dans le sens des surfaces des surfaces de guidage.

3. Un dispositif à broche basé sur l'affirmation 1 et se singularisant par le fait que le profil circulaire de la bague de distribution (12) a une coupe essentiellement identique à celle d'un trapèze.

4. Un dispositif à broche basé sur l'affirmation 3 et se singularisant par le fait que la surface à la périphérie extérieure de la bague de distribution (12) a une rainure circulaire.

5. Un dispositif à broche basé sur l'affirmation 1 et se singularisant par le fait que la bague de distribution (22, 32, 42) présente une section circulaire (22.1, 32.1, 42.1) interne essentiellement de forme cylindrique, et au niveau de laquelle vient s'implanter au moins une bague conique (22.2, 32.2, 42.2) qui s'élargit vers le haut et vers l'extérieur.

6. Un dispositif à broche basé sur l'affirmation 5 et se singularisant par le fait que la bague de distribution (22) se compose d'une bague conique (22.2) qui s'élargit vers le haut et vers l'extérieur au niveau de la section circulaire (22.1).

7. Un dispositif à broche basé sur l'affirmation 5 et se singularisant par le fait que la bague de distribution (32) présente une section circulaire (32.4) dirigée vers l'extérieur, dans l'axe radial, au niveau de l'extrémité inférieure de la section cylindrique (32.1).

8. Un dispositif à broche basé sur l'affirmation 5 et se singularisant par le fait que la bague de distribution (42) trois présente une bague conique (42.2) dirigée vers le haut et vers l'extérieur, au niveau de la section cylindrique (42.1).

9. Un dispositif à broche basé sur l'affirmation 8 et se singularisant par le fait que la bague conique (42.2) dans la zone occupée par la section circulaire (42.1) présente une section de transition arrondie.

10. Un dispositif à broche basé sur l'une des affirmations 1 à 9 et se singularisant par le fait que l'axe pivot (3) comporte une rainure circulaire (3.2) qui permet de fixer la bague de distribution de lubrifiant (12, 22, 32, 42).

11. Un dispositif à broche basé sur l'une des affirmations précédentes et se singularisant par le fait que le coussinet (4) réalisé par moulage sous pression fasse appel à une matière plastique très robuste et présente un dispositif (10) réalisé en matière plastique durant le moulage sous pression.

12. Un dispositif à broche basé sur l'une des affirmations précédentes et se singularisant par le fait que le coussinet (4) présente à son extrémité inférieure une section comportant un enroulement externe pour assurer la fixation par le biais d'une ouverture du cadre à bobine (13), sur la section à enroulement duquel vient se visser le coussinet (4) dans le cadre à bobine (13) à l'aide d'un écrou fileté (5).

13. Un dispositif à broche basé sur l'affirmation (12) et se singularisant par le fait que le coussinet (4) à la moitié supérieure de l'enroulement externe comporte un épaulement d'appui (4.2) pour .soutenir le coussinet contre la partie supérieure du cadre à bobine (13).

14. Un dispositif à broche basé sur l'une des affirmations précédentes et se singularisant par le fait qu'une poulie de stockage de fil (8), à la moitié supérieure du coussinet, vient se fixer autour de l'arbre pivot (3), à la partie inférieure de laquelle vient s'implanter une chemise de cylindre (8.1), qui, dans la zone de la chemise inférieure et à une courte distance de la périphérie extérieure du coussinet (4) vient reposer contre une nervure circulaire (4.1) qui se trouve sur le plan radial et se projette vers l'extérieur.

15. Un dispositif à broche basé sur l'une des affirmations précédentes et se singularisant par le fait que le coussinet comporte au niveau de sa périphérie externe des cannelures qui sont présentes sur une partie de sa longueur, dans l'axe radial, et pointent vers l'extérieur et dans le sens axial.
